# EUROPÄISCHE PATENTSCHRIFT

(11) **EP 1 134 435 B1**
(45) Veröffentlichungstag und Bekanntmachung des Hinweises auf die Patenterteilung: **03.12.2003**
(21) Anmeldenummer: 01810220.2
(22) Anmeldetag: 05.03.2001
(51) Int. Cl.: F16B 13/12, F16B 37/08, F16B 37/12

(54) **Dübel**
Dowel
Cheville

(30) Priorität: 15.03.2000 DE 10012644
(43) Veröffentlichungstag der Anmeldung: 19.09.2001
(73) Patentinhaber: HILTI Aktiengesellschaft, 9494 Schaan (LI)
(72) Erfinder: Wieser, Jürgen, 86916 Kaufering (DE)
(74) Vertreter: Wildi, Roland

(56) Entgegenhaltungen:
- EP-A- 0 008 085
- EP-A- 0 388 694
- EP-A- 0 736 695
- US-A- 2 707 897

## Beschreibung

Die Erfindung betrifft einen Spreizdübel mit einem Dübelkörper und einer Spreizhülse, wobei der Dübelkörper eine zentrische Bohrung mit, sich in Setzrichtung zumindest teilweise verjüngender, Innenkontur und in dem sich in Setzrichtung an die Bohrung anschliessenden Bereich ein Innengewinde als Lastangriffsmittel sowie in dem sich in Setzrichtung entgegengesetzten Bereich einen Kragen, und gegenüber dem Bereich einen grösseren Aussendurchmesser aufweist und wobei die Spreizhülse eine zylindrische Innenkontur und eine sich in Setzrichtung zumindest teilweise verjüngende Aussenkontur aufweist.

Spreizdübel der in Rede stehenden Art dienen insbesondere dem Abhängen von Zwischendecken, Verkleidungen, Gerüsten, Rohren, Leitungen und dergleichen. Da diese Spreizdübel in grossen Stückzahlen Anwendung finden, wird daran insbesondere die Forderung gestellt, dass sie wirtschaftlich herstellbar sind und unter geringstem Zeitaufwand und ohne besonderen Aufwand hinsichtlich Werkzeugen gesetzt werden können. Die Spreizdübel sind derart aufgebaut, dass ein Teil als Dübelkörper ausgebildet ist, weicher der Lastaufnahme dient. Durch Einschlagen eines Spreizelementes in den Dübelkörper verspreizt sich dieser in einer vorbereiteten Aufnahmebohrung in Gestein, Beton, Mauerwerk und dergleichen Aufnahmematerialen. Sie werden jedoch auch in weniger festen Aufnahmematerialen, wie beispielsweise Holz, verwendet.

Ein Spreizdübel der genannten Art ist beispielsweise aus der DE 195 12 415 A1 bekannt, der aus einem zylindrischen Dübelkörper mit einem Kragen und einer Spreizhülse besteht. Der Dübelkörper weist eine Bohrung auf. Der bekannte Spreizdübel ist durch die Spreizhülse, die in die der Setzrichtung abgewandten Öffnung der Bohrung eingetrieben wird, verspreizbar. Im vorderen Bereich des Dübelkörpers ist die Innenkontur der Bohrung als Innengewinde ausgebildet und dient als Lastangriffsmittel. Zur Befestigung von Lasten kann nun beispielsweise eine passende Gewindestange in die Bohrung eingeführt und in das Innengewinde geschraubt werden. Um die Aufnahme der Gewindestange sicherzustellen, weist die Spreizhülse einen Innendurchmesser auf, der grösser oder gleich dem Innendurchmesser der im vorderen Bereich befindlichen Bohrung ist. Der bekannte Spreizdübel ist ohne zusätzliches spezielles Setzwerkzeug einfach mit einem Hammer setzbar. Zudem stellt der am hinteren Ende des Dübelkörpers vorgesehene Kragen ein bohrlochtiefenunabhängiges und bündiges Verspreizen des Spreizdübels sicher.

Nachteilig bei diesem bekannten Spreizdübel ist der Umstand, dass die Gewindestange mittels Einschrauben in dem Innengewinde des Spreizdübels verankert wird. Dieser Einschraubvorgang benötigt viel Zeit und wirkt sich dadurch negativ auf die Wirtschaftlichkeit bei der Anwendung aus.

Ferner muss die Länge der Gewindestange durch die Verwendung beispielsweise einer Feinsäge auf die Anwendung abgestimmt werden, was erheblich Zeit in Anspruch nimmt. Wird zu diesem Zwecke beispielsweise ein Bolzenschneider anstelle der Feinsäge verwendet, so kann es zu einer Beschädigung des Gewindeendes der Gewindestange kommen. Durch diesen Umstand wird der Einschraubvorgang zusätzlich verzögert oder gar unmöglich.

Der vorliegenden Erfindung liegt die Aufgabe zugrunde, einen Spreizdübel zu schaffen, der einerseits ein schnelles und zuverlässiges Positionieren der Gewindestange zulässt und andererseits auch wirtschaftlich herstellbar ist.

Erfindungsgemäss wird die Aufgabe dadurch gelöst, dass der Dübelkörper in dem in Setzrichtung weisenden Bereich zumindest eine an das Innengewinde, entgegen der Setzrichtung in einem Abstand eine als Gelenk wirkende, angrenzende Materialschwächung aufweist und zumindest zwei Längsschlitze, die in Setzrichtung offen ausgebildet sind und sich zumindest bis in den Bereich der Materialschwächung erstrecken, vorgesehen sind.

Dadurch, dass das Innengewinde durch zumindest zwei Längsschlitze und ein Gelenk in radial nach aussen nachgebende und zurückfedernde Gewindesegmente unterteilt wird, ist es nach dem Festlegen des Spreizdübels im Aufnahmematerial durch verspreizen möglich, die Gewindestange unter axialem Druck in Setzrichtung bis zur gewünschten Position in die Bohrung einzuschieben. Durch den entfallenden Einschraubvorgang wird einerseits Zeit gespart und andererseits sind Beschädigungen des Gewindeendes unerheblich. Somit kann die Länge der Gewindestange mit Hilfe eines Bolzenschneiders auf die Anwendung abgestimmt werden. Greift eine auf die positionierte Gewindestange entgegen der Setzrichtung wirkende Belastung an, so bewirken die Gewindesegmente eine Lastaufnahme.

Vorzugsweise wird die Materialschwächung durch eine umlaufende Nut gebildet. Das Einbringen einer Nut ist herstellungstechnisch einfach und somit wirtschaftlich.

Vorteilhafterweise ist die Nut an der Innenkontur des Dübelkörpers angeordnet. Diese Anordnung der Nut lässt sich in einem Verfahrensschritt mit der Ausbildung des Innengewindes herstellen und hat eine weitere Senkung der Herstellungskosten des Spreizdübels zur Folge.

Ferner kann in bevorzugter Weise auch durch die Verwendung eines elastischen Materials, zumindest im Bereich des Gelenkes, eine Materialschwächung erzielt werden, dadurch kann eine höhere Elastizität des Gelenkes bewirkt werden.

Um ein Einführen der Gewindestange mit einem geringen Kraftaufwand zu gewährleisten, entspricht der Abstand maximal etwa dem Durchmessers des Innengewindes.

Dadurch, dass die Nut eine Tiefe aufweist, die dem 0,05- bis 3-fachen des Abstandes entspricht, ist eine optimale Haltefunktion des Lastangriffmittels sichergestellt. Dabei wirkt das Gelenk als Drehpunkt und der Gewindegang als Kraftangriffspunkt. Die Tiefe der Nut lässt sich ausserdem herstellungstechnisch einfach kontrollieren.

Dadurch, dass der Dübelkörper und die Spreizhülse vorzugsweise aus Kunststoff sind, sind die Herstellungskosten des Spreizdübels wirtschaftlich. Als Material für den Spreizdübel kann auch Metall Anwendung finden.

Die Erfindung wird nachstehend anhand einer ein Ausführungsbeispiel wiedergebenden Zeichnung näher erläutert.

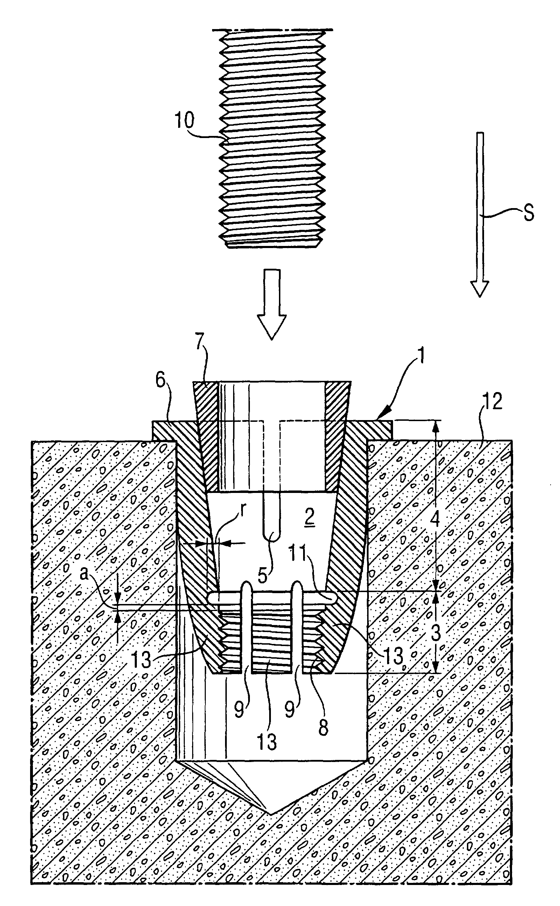

Die Zeichnung zeigt einen erfindungsgemässen Spreizdübel, der einen zylinderförmigen Dübelkörper 1 mit einer zentralen Bohrung 2 und eine Spreizhülse 7 aufweist. Der Dübelkörper 1 weist einen in Setzrichtung S vorderen Bereich 3 und einen der Setzrichtung S abgewandten hinteren Bereich 4 auf. Der hintere Bereich 4 des Dübelkörpers 1 bildet den Spreizbereich. An dem der Setzrichtung S abgewandten Ende des Dübelkörpers 1 ist ein Kragen 6 ausgebildet, der beim Setzen des Spreizdübels im Aufnahmematerial 12, beispielsweise Beton, als Anschlag dient.

Die zentrale Bohrung 2 im hinteren Bereich 4 des Dübelkörpers 1 dient zur Aufnahme der Spreizhülse 7, die als Spreizelement wirkt. Die Innenkontur der Bohrung 2 ist über die gesamte Länge konisch ausgebildet und zwar derart, dass der Innendurchmesser der Bohrung 2 in Setzrichtung S abnimmt. Die Aussenkontur der Spreizhülse 7 ist komplementär zur Innenkontur der Bohrung 2 des Dübelkörpers 1 ausgebildet. Beim Einschlagen der Spreizhülse 7 in die Bohrung 2 weitet diese den Spreizbereich auf. Durch die konische Ausbildung der Bohrung 2 und der komplementär dazu ausgebildeten Spreizhülse 7 wird die Spreizkraft der eingetriebenen Spreizhülse 7 gleichmässig über die Kontaktfläche zwischen Dübelkörper 1 und Spreizhülse 7 verteilt. Um eine Setzkontrolle zu ermöglichen, ist die Spreizhülse 7 derart bemessen, dass sie im eingeschlagenen Zustand ohne Überstand bündig mit dem Kragen 6 abschliesst.

Der vordere Bereich 3 des Dübelkörpers 1 weist gegenüber dem hinteren Bereich 4 einen geringeren Aussen- und Innendurchmesser auf und besitzt ein Innengewinde 8 als Lastangriffsmittel. Im Bereich des Innengewindes 8 weist der Dübelkörper 1 zumindest zwei Längsschlitze 9 auf, die gegen das in Setzrichtung S liegende Ende des Dübelkörpers 1 offen ausgebildet sind. Von der Setzrichtung S abgewandt, mit einem Abstand a zum Innengewinde 8, besitzt der Dübelkörper 1 ein plastisches Gelenk, das durch eine am Innenumfang der Bohrung 2 angeordneten Nut 11 mit der Tiefe r ausgebildet ist. Zusammen mit den sich bis in die Nut 11 erstreckenden Längsschlitz 9 wird der Dübelkörper 1 im Bereich des Innengewindes 8 dadurch in nach aussen nachgebende und zurückfedernde Gewindesegmente 13 unterteilt. Somit ist es möglich, eine Gewindestange 10 unter leichtem axialen Druck in Setzrichtung S bis zur gewünschte Position in die Bohrung 2 einzuschieben. Greift eine an der positionierte Gewindestange 10 entgegen der Setzrichtung S auftretende Belastung an, so bewirken die federnden Gewindesegmente 13 eine sichere Lastaufnahme.

## Patentansprüche

1. Spreizdübel mit einem Dübelkörper (1) und einer Spreizhülse (7), wobei der Dübelkörper (1) eine zentrische Bohrung (2) mit, sich in Setzrichtung (S) zumindest teilweise verjüngender, Innenkontur und in dem sich in Setzrichtung (S) an die Bohrung (2) anschliessenden Bereich (3) ein Innengewinde (8) als Lastangriffsmittel sowie in dem sich in Setzrichtung (S) entgegengesetzten Bereich (4) einen Kragen (6), und gegenüber dem Bereich (3) einen grösseren Aussendurchmesser aufweist und wobei die Spreizhülse (7) eine zylindrische Innenkontur und eine sich in Setzrichtung (S) zumindest teilweise verjüngende Aussenkontur aufweist, **dadurch gekennzeichnet, dass** der Dübelkörper (1) in dem in Setzrichtung (S) weisenden Bereich (3) zumindest eine an das Innengewinde (8), entgegen der Setzrichtung (S) in einem Abstand (a) eine als Gelenk wirkende, angrenzende Materialschwächung aufweist und zumindest zwei Längsschlitze (9), die in Setzrichtung (S) offen ausgebildet sind und sich zumindest bis in den Bereich der Materialschwächung erstrecken, vorgesehen sind.

2. Spreizdübel nach Anspruch 1, **dadurch gekennzeichnet, dass** die Materialschwächung durch eine umlaufende Nut (11) gebildet wird.

3. Spreizdübel nach Anspruch 1 oder 2, **dadurch gekennzeichnet, dass** die Nut (11) an der Innenkontur des Dübelkörpers (1) angeordnet ist.

4. Spreizdübel nach einem der Ansprüche 1 bis 3, **dadurch gekennzeichnet, dass** der Abstand (a) maximal etwa dem Durchmessers des Innengewindes (8) entspricht.

5. Spreizdübel nach Anspruch 4, **dadurch gekennzeichnet, dass** die Nut (11) eine Tiefe (r) aufweist, die dem 0,05- bis 3-fachen des Abstandes (a) entspricht.

6. Spreizdübel nach Anspruch 1, **dadurch gekennzeichnet, dass** die Materialschwächung durch Verwendung eines elastischen Materials, zumindest im Bereich des Gelenkes erzielt wird.

7. Spreizdübel nach einem der Ansprüche 1 bis 6, **dadurch gekennzeichnet, dass** der Dübelkörper (1) und die Spreizhülse (7) aus Kunststoff sind.

## Claims

1. An expansion anchor comprising a plug body (1) and an expansion sleeve (7), wherein the plug body (1) comprises a central bore (2) having an internal contour which tapers at least partially in the direction of placement (S) and comprises an internal screw thread (8) as a load application means in the region (3) which adjoins the bore (2) in the direction of placement (S), as well as a collar (6) in a region (4) which is opposite to the direction of placement (S) and which has a larger outside diameter than that of region (3), and wherein the expansion sleeve (7) has a cylindrical internal contour and an external contour which tapers at least partially in the direction of placement (S), **characterised in that** in the region (3) which points in the direction of placement (S) the plug body (1) comprises at least one weakening of the material which acts as a joint and which is adjacent to and at a distance (a) from the internal screw thread (8) in the direction opposite to the direction of placement (S), and at least two longitudinal slits (9) are provided which are open in the direction of placement (S) and which extend at least into the region of weakening of the material.

2. An expansion anchor according to claim 1, **characterised in that** the weakening of the material is formed by an encircling groove (11).

3. An expansion anchor according to claim 1 or 2, **characterised in that** the groove (11) is disposed on the internal contour of the plug body (1).

4. An expansion anchor according to any one of claims 1 to 3, **characterised in that** the distance (a) corresponds at most to approximately the diameter of the internal screw thread (8).

5. An expansion anchor according to claim 4, **characterised in that** the groove (11) has a depth (r) which corresponds to 0.05 to 3 times the distance (a).

6. An expansion anchor according to claim 1, **characterised in that** the weakening of the material is achieved by the use of an elastic material, at least in the region of the joint.

7. An expansion anchor according to any one of claims 1 to 6, **characterised in that** the plug body (1) and the expansion sleeve (7) are made of plastics.

## Revendications

1. Cheville à expansion avec un corps de cheville (1) et un manchon d'expansion (7), le corps de cheville (1) présentant un trou central (2) avec un contour intérieur au moins partiellement rétréci dans la direction de scellement (S) et, dans la zone (3) raccordée au trou (2) dans la direction de scellement (S), un taraudage (8) faisant fonction de moyen d'application de charge ainsi que, dans la zone (4) opposée à la direction de scellement (S), un collet (6) et un diamètre extérieur supérieur à celui de la zone (3), et le manchon d'expansion (7) présentant un contour intérieur cylindrique et un contour extérieur au moins partiellement rétréci dans la direction de scellement (S), **caractérisée en ce que**, dans la zone (3) orientée dans la direction de scellement (S), le corps de cheville (1) comporte au moins un affaiblissement de matière adjacent au taraudage (8), agissant comme articulation à une distance (a) à l'opposé de la direction de scellement (S), et au moins deux fentes longitudinales (9), qui sont de conception ouverte dans la direction de scellement (S) et s'étendent au moins jusque dans la zone de l'affaiblissement de matière, sont prévues.

2. Cheville à expansion selon la revendication 1, **caractérisée en ce que** l'affaiblissement de matière est formé par une gorge périphérique (11).

3. Cheville à expansion selon la revendication 1 ou 2, **caractérisée en ce que** la gorge (11) est disposée sur le contour intérieur du corps de cheville (1).

4. Cheville à expansion selon une des revendications 1 à 3, **caractérisée en ce que** la distance (a) correspond au maximum environ au diamètre du taraudage (8).

5. Cheville à expansion selon la revendication 4, **caractérisée en ce que** la gorge (11) présente une profondeur (r) qui correspond à 0,05 à 3 fois la distance (a).

6. Cheville à expansion selon la revendication 1, **caractérisée en ce que** l'affaiblissement de matière est réalisé par l'emploi d'une matière élastique, au moins dans la zone de l'articulation.

7. Cheville à expansion selon une des revendications 1 à 6, **caractérisée en ce que** le corps de cheville (1) et le manchon expansible (7) sont en matière plastique.
